# EUROPEAN PATENT APPLICATION

(11) **EP 4 832 403 A1**
(43) Date of publication of application: **28.10.2026**
(21) Application number: 25747500.4
(22) Date of filing: 13.01.2025
(51) Int. Cl.: H04L 5/00

(54) **COMMUNICATION METHOD AND APPARATUS**

(30) Priority: 31.01.2024 CN 202410148678
(71) Applicant: Huawei Technologies Co., Ltd., Shenzhen, Guangdong 518129 (CN)
(72) Inventor: QU, Weilin, Shenzhen, Guangdong 518129 (CN); LUO, Zhihu, Shenzhen, Guangdong 518129 (CN)
(74) Representative: Huawei European IPR
(86) International application number: PCT/CN2025/072018
(87) International publication number: WO 2025/161924

(57) **Abstract**

A communication method and apparatus are provided, to improve PBCH receiving performance of a narrowband terminal while reducing common channel overheads. The method includes: mapping *M* symbols of a physical broadcast channel PBCH to a PBCH time-frequency resource. The PBCH time-frequency resource consists of a first time-frequency resource and a second time-frequency resource, and subcarriers occupied by the first time-frequency resource and the second time-frequency resource do not overlap. *M*₁ consecutive symbols in the *M* symbols are mapped to the first time-frequency resource, remaining *M - M*₁ symbols are mapped to the second time-frequency resource, and *M* and *M*₁ are positive integers greater than 1. For example, the *M*₁ consecutive symbols may be first *M*₁ symbols or last *M*₁ symbols in the *M* symbols.

## Description

This application claims priority to Chinese Patent Application No. 202410148678.8, filed with the China National Intellectual Property Administration on January 31, 2024 and entitled "COMMUNICATION METHOD AND APPARATUS", which is incorporated herein by reference in its entirety.

### TECHNICAL FIELD

Embodiments of this application relate to the communication field, and in particular, to a communication method and apparatus.

### BACKGROUND

Services of a fifth generation (fifth generation, 5G) mobile communication system mainly include an enhanced mobile broadband (enhanced mobile broadband, eMBB) service, an ultra-reliable low-latency communication (ultra-reliability low-latency communication, URLLC) service, and a massive machine-type communication (massive machine-type communication, mMTC) service.
mMTC usually has requirements for low power consumption, low costs, a low rate, and enhanced coverage. However, a narrower bandwidth is the most direct way to reduce terminal costs. Therefore, based on different services, there may be a plurality of types of terminals with different bandwidths in the communication system, for example, an eMBB terminal and a reduced capability (reduced capability, RedCap) terminal. A bandwidth of the RedCap terminal is less than a bandwidth of the eMBB terminal.

Usually, for different types of terminals, a network side may separately send a dedicated physical broadcast channel (physical broadcast channel, PBCH) for terminal access. Although this solution effectively ensures performance of initial access of a narrowband terminal, common channel overheads on the network side are greatly increased.

However, to reduce overheads, if the narrowband terminal directly receives a PBCH currently designed for a conventional terminal, PBCH receiving performance of the narrowband terminal will greatly deteriorate.

### SUMMARY

This application provides a communication method and apparatus, to improve PBCH receiving performance of a narrowband terminal while reducing common channel overheads.

According to a first aspect, a communication method is provided. The method may be performed by a RAN node, may be performed by a module (for example, a processor, a chip, or a chip system) used in the RAN node, or may be implemented by a logical node, a logical module, or software that can implement all or a part of functions of the RAN node. The method includes: mapping *M* symbols of a physical broadcast channel PBCH to a PBCH time-frequency resource. The PBCH time-frequency resource consists of a first time-frequency resource and a second time-frequency resource, and subcarriers occupied by the first time-frequency resource and the second time-frequency resource do not overlap. *M*₁ consecutive symbols in the *M* symbols are mapped to the first time-frequency resource, remaining *M* - *M*₁ symbols are mapped to the second time-frequency resource, and *M* and *M*₁ are positive integers greater than 1.

Based on this solution, the PBCH time-frequency resource is divided into two parts in this application, the *M*₁ consecutive symbols of the PBCH are mapped to one part (namely, the first time-frequency resource) of the resource, and the remaining *M* - *M*₁ symbols are mapped to the other part (namely, the second time-frequency resource) of the resource. When a narrowband terminal may receive information carried on the first time-frequency resource, the narrowband terminal can obtain the *M*₁ consecutive symbols of the PBCH, so that there is a higher probability of demodulating complete system information, thereby improving PBCH receiving performance of the narrowband terminal. In addition, a broadband terminal may receive the complete PBCH on the PBCH time-frequency resource. In other words, the PBCH does not need to be separately sent for the narrowband terminal and the broadband terminal, so that common channel overheads can be reduced.

According to a second aspect, a communication method is provided. The method may be performed by a first-type terminal, may be performed by a module (for example, a processor, a chip, or a chip system) used in the first-type terminal, or may be implemented by a logical node, a logical module, or software that can implement all or a part of functions of the first-type terminal. The method includes: obtaining *M*₁ symbols of a physical broadcast channel PBCH, where *M*₁ the symbols are mapped to a first time-frequency resource. The first time-frequency resource belongs to a PBCH time-frequency resource, the PBCH time-frequency resource consists of the first time-frequency resource and a second time-frequency resource, and subcarriers occupied by the first time-frequency resource and the second time-frequency resource do not overlap. The *M*₁ symbols are *M*₁ consecutive symbols in *M* symbols of the PBCH, remaining *M* - *M*₁ symbols in the *M* symbols are mapped to the second time-frequency resource, and *M* and *M*₁ are positive integers greater than 1. For technical effects brought by the second aspect, refer to the technical effects brought by the first aspect. Details are not described herein again.

According to a third aspect, a communication method is provided. The method may be performed by a second-type terminal, may be performed by a module (for example, a processor, a chip, or a chip system) used in the second-type terminal, or may be implemented by a logical node, a logical module, or software that can implement all or a part of functions of the second-type terminal. The method includes: obtaining *M* symbols of a physical broadcast channel PBCH, where the *M* symbols are mapped to a PBCH time-frequency resource, the PBCH time-frequency resource consists of a first time-frequency resource and a second time-frequency resource, and subcarriers occupied by the first time-frequency resource and the second time-frequency resource do not overlap. *M*₁ consecutive symbols in the *M* symbols are mapped to the first time-frequency resource, remaining *M* - *M*₁ symbols are mapped to the second time-frequency resource, and *M* and *M*₁ are positive integers greater than 1. For technical effects brought by the third aspect, refer to the technical effects brought by the first aspect. Details are not described herein again.

With reference to the first aspect, the second aspect, or the third aspect, in a possible design, a bandwidth of the first time-frequency resource is less than or equal to a maximum receive bandwidth of the first-type terminal. A bandwidth of the PBCH time-frequency resource is greater than the maximum receive bandwidth of the first-type terminal, and is less than or equal to a maximum receive bandwidth of the second-type terminal.

Based on the possible design, the bandwidth of the first time-frequency resource is less than or equal to the maximum receive bandwidth of the first-type terminal, so that the first-type terminal can receive all information on the first time-frequency resource. In other words, it is ensured that the first-type terminal can receive the *M*₁ consecutive symbols of the PBCH, thereby improving PBCH receiving performance of the first-type terminal. In addition, the bandwidth of the PBCH time-frequency resource is less than or equal to the maximum receive bandwidth of the second-type terminal, so that PBCH receiving performance of the second-type terminal can be ensured.

With reference to the first aspect, the second aspect, or the third aspect, in a possible design, the first time-frequency resource is a common PBCH time-frequency resource of the first-type terminal and the second-type terminal, and the second time-frequency resource is a PBCH time-frequency resource dedicated to the second-type terminal relative to the first-type terminal.

Based on the possible design, the first-type terminal can receive all the information on the first time-frequency resource. In other words, it is ensured that the first-type terminal can receive the *M*₁ consecutive symbols of the PBCH, thereby improving the PBCH receiving performance of the first-type terminal. In addition, the second-type terminal can receive the complete PBCH on the complete PBCH time-frequency resource, thereby ensuring the PBCH receiving performance of the second-type terminal.

With reference to the first aspect, the second aspect, or the third aspect, in a possible design, subcarriers occupied by the first time-frequency resource are contiguous in frequency domain.

With reference to the first aspect, the second aspect, or the third aspect, in a possible design, the *M*₁ consecutive symbols in the *M* symbols are first *M*₁ symbols in the *M* symbols.

With reference to the first aspect, the second aspect, or the third aspect, in a possible design, the *M*₁ consecutive symbols in the *M* symbols are last *M*₁ symbols in the *M* symbols.

Based on the foregoing two possible designs, because the PBCH is usually encoded by using polar code, based on a polar code design principle, after information bits of the PBCH are encoded, important information bits are usually located at a front or an end of a sequence. Therefore, when the first *M*₁ symbols or the last *M*₁ symbols in the *M* symbols are mapped to the first time-frequency resource, because a bit weight included in the first *M*₁ symbols or the last *M*₁ symbols is high, the first-type terminal can receive the important information bits as much as possible. Therefore, there is a higher probability of demodulating the complete system information, thereby improving the PBCH receiving performance of the first-type terminal.

With reference to the first aspect, the second aspect, or the third aspect, in a possible design, *M*₁ is a quantity of valid resource elements REs in the first time-frequency resource, and the valid RE is an RE in the first time-frequency resource other than an RE used for mapping a demodulation reference signal DMRS.

With reference to the first aspect, the second aspect, or the third aspect, in a possible design, a mapping order of the *M*₁ consecutive symbols on the first time-frequency resource is the same as a mapping order of the remaining *M* - *M*₁ symbols on the second time-frequency resource.

Based on the possible design, the mapping order of the symbols of the PBCH on the first time-frequency resource is the same as that on the second time-frequency resource, so that processing complexity of the RAN node and the terminal can be reduced.

With reference to the first aspect, the second aspect, or the third aspect, in a possible design, the mapping order of the *M*₁ consecutive symbols on the first time-frequency resource is: first in ascending order of subcarrier indexes and then in ascending order of orthogonal frequency division multiplexing OFDM symbol indexes.

With reference to the first aspect, the second aspect, or the third aspect, in a possible design, a union set of OFDM symbols occupied by the first time-frequency resource and the second time-frequency resource is OFDM symbols occupied by the PBCH time-frequency resource.

In an implementation scenario, the *M*₁ consecutive symbols mapped to the first time-frequency resource may be replaced with *M*₁ symbols in *M*₂ consecutive symbols of the PBCH, and *M*₂ > *M*₁. In this scenario, the *M*₁ symbols mapped to the first time-frequency resource may be *M*₁ consecutive symbols, or may be *M*₁ inconsecutive symbols. This is not limited.

According to a fourth aspect, a communication apparatus is provided, to implement various methods. The communication apparatus includes corresponding modules, units, or means (means) for implementing the methods. The modules, units, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function according to any one of the foregoing aspects and the possible implementations of the foregoing aspects. The transceiver module may include a receiving module and a sending module that are respectively configured to implement a receiving function and a sending function according to any one of the foregoing aspects or the possible implementations of the foregoing aspects.

In some possible designs, the transceiver module may include a transceiver circuit, a transceiver machine, a transceiver, or a communication interface.

According to a fifth aspect, a communication apparatus is provided, including a processor and a memory. The memory is configured to store computer instructions. When the processor executes the instructions, the communication apparatus is enabled to perform the method according to any one of the foregoing aspects.

According to a sixth aspect, a communication apparatus is provided, including a processor and a communication interface. The communication interface is configured to communicate with a module other than the communication apparatus. The processor is configured to execute a computer program or instructions, to enable the communication apparatus to perform the method according to any one of the foregoing aspects.

According to a seventh aspect, a communication apparatus is provided, including at least one processor. The processor is configured to execute a computer program or instructions stored in a memory, to enable the communication apparatus to perform the method according to any one of the foregoing aspects. The memory may be coupled to the processor, or may be independent of the processor.

According to an eighth aspect, a communication apparatus (for example, the communication apparatus may be a chip or a chip system) is provided. The communication apparatus includes a processor, configured to implement a function according to any one of the first aspect to the third aspect.

In some possible designs, the communication apparatus includes a memory, and the memory is configured to store necessary program instructions and data.

In some possible designs, when the apparatus is the chip system, the apparatus may include a chip, or may include a chip and another discrete device.

It may be understood that the communication apparatus provided in the fourth aspect to the eighth aspect may be the RAN node in the first aspect, may be a module or unit (for example, a chip, a chip system, or a circuit) that is in the RAN node and that performs, in one-to-one correspondence, the method/operation/step/action described in the first aspect, may be a module or unit that can be used in conjunction with the RAN node, or may be a logical node, a logical module, or software that can implement all or a part of functions of the RAN node.

Alternatively, the communication apparatus may be the first-type terminal in the second aspect, may be a module or unit (for example, a chip, a chip system, or a circuit) that is in the first-type terminal and that performs, in one-to-one correspondence, the method/operation/step/action described in the second aspect, may be a module or unit that can be used in conjunction with the first-type terminal, or may be a logical node, a logical module, or software that can implement all or a part of functions of the first-type terminal.

Alternatively, the communication apparatus may be the second-type terminal in the third aspect, may be a module or unit (for example, a chip, a chip system, or a circuit) that is in the second-type terminal and that performs, in one-to-one correspondence, the method/operation/step/action described in the third aspect, may be a module or unit that can be used in conjunction with the second-type terminal, or may be a logical node, a logical module, or software that can implement all or a part of functions of the second-type terminal.

According to a ninth aspect, a computer-readable storage medium is provided. The computer-readable storage medium stores a computer program or instructions. When the computer program or the instructions are run on a communication apparatus, the communication apparatus is enabled to perform the method according to any one of the first aspect to the third aspect.

According to a tenth aspect, a computer program product including instructions is provided. When the computer program product is run on a communication apparatus, the communication apparatus is enabled to perform the method according to any one of the first aspect to the third aspect.

According to an eleventh aspect, a communication system is provided. The communication system includes a RAN node, a first-type terminal, and a second-type terminal. The RAN node is configured to perform the method according to any one of the first aspect and the possible designs of the first aspect, the first-type terminal is configured to perform the method according to any one of the second aspect and the possible designs of the second aspect, and the second-type terminal is configured to perform the method according to any one of the third aspect and the possible designs of the third aspect.

For technical effects brought by any one of the design manners of the fourth aspect to the eleventh aspect, refer to the technical effects brought by different design manners of the first aspect to the third aspect. Details are not described herein again.

### BRIEF DESCRIPTION OF DRAWINGS

FIG. 1 is a diagram of a time-frequency resource grid according to this application;
FIG. 2 is a diagram of a time-frequency position of a PBCH according to this application;
FIG. 3 is a diagram of receiving a PBCH by a narrowband terminal according to this application;
FIG. 4 is a diagram of PBCH receiving performance of a narrowband terminal and a conventional terminal according to this application;
FIG. 5 is a diagram of a structure of a communication system according to this application;
FIG. 6 is a schematic flowchart of a communication method according to this application;
FIG. 7 to FIG. 9 are diagrams of positions of a first time-frequency resource and a second time-frequency resource according to this application;
FIG. 10 and FIG. 11 are diagrams of symbol mapping orders according to this application; and
FIG. 12 to FIG. 14 are diagrams of structures of communication apparatuses according to this application.

### DESCRIPTION OF EMBODIMENTS

In the descriptions of this application, unless otherwise specified, the character "/" represents that associated objects are in an "or" relationship. For example, A/B may represent A or B. The term "and/or" in this application merely describes an association relationship between associated objects and represents that three relationships may exist. For example, A and/or B may represent three cases: Only A exists, both A and B exist, or only B exists, where A and B may be singular or plural.

In the descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution order, and the terms such as "first" and "second" do not indicate a definite difference.

In embodiments of this application, the term "example", "for example", or the like is used to give an example, an illustration, or a description. Any embodiment or design scheme described as an "example" or "for example" in embodiments of this application should not be explained as being more preferred or having more advantages than another embodiment or design scheme. Exactly, the term like "example" or "for example" is used to present a related concept in a specific manner for ease of understanding.

It may be understood that an "embodiment" used throughout this specification means that particular features, structures, or characteristics related to embodiments are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the processes do not mean execution orders in various embodiments of this application. The execution orders of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, mutual reference may be made between same or similar parts of various embodiments. In embodiments of this application, unless otherwise specified or there is a logic conflict, terms and/or descriptions in different embodiments are consistent and may be mutually referenced, and technical features in the different embodiments may be combined based on an internal logical relationship thereof, to form a new embodiment. The following implementations of this application do not constitute a limitation on the protection scope of this application.

For ease of understanding of the technical solutions in embodiments of this application, the following first briefly describes technologies related to this application.

### 1. New radio (new radio, NR)

A fifth generation (fifth generation, 5G) mobile communication technology NR is a brand new air interface design that is based on orthogonal frequency division multiplexing (orthogonal frequency division multiplexing, OFDM), and is also a basis of a next generation cellular communication technology. NR services mainly include an enhanced mobile broadband (enhanced mobile broadband, eMBB) service, an ultra-reliable low-latency communication (ultra-reliability low-latency communication, URLLC) service, and a massive machine-type communication (massive machine-type communication, mMTC) service.

In NR, an elementary unit in frequency domain is one subcarrier, and a subcarrier spacing (subcarrier spacing, SCS) may be 15 kHz, 30 kHz, or the like. At an NR physical layer, a unit of an uplink or downlink frequency domain resource is a resource block (resource block, RB), and each RB includes 12 contiguous subcarriers in frequency domain.

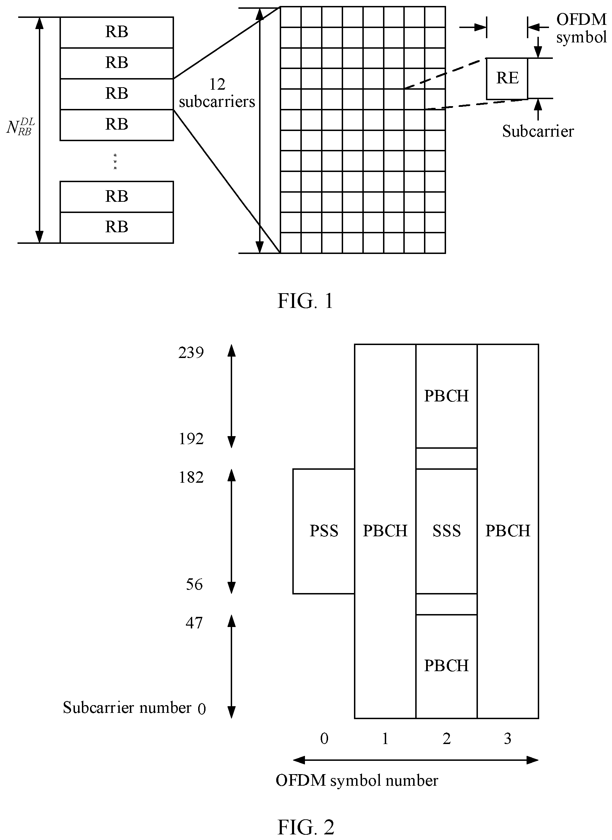

For example, an NR downlink time-frequency resource grid is shown in FIG. 1. ${N}_{RB}^{DL}$ represents a quantity of downlink RBs. Each element on the resource grid is referred to as a resource element (resource element, RE). The RE is a minimum physical resource, and includes a subcarrier in an OFDM symbol. An uplink time-frequency resource grid is similar to the downlink time-frequency resource network. Details are not described herein.

### 2. Synchronization signal/Physical broadcast channel block (SS/PBCH block, SSB)

In NR, the SSB includes a primary synchronization signal (primary synchronization signal, PSS), a secondary synchronization signal (secondary synchronization signal, SSS), and a physical broadcast channel (physical broadcast channel, PBCH). The PBCH carries a master information block (master information block, MIB).

In time domain, one SSB occupies four consecutive OFDM symbols, and the four OFDM symbols are sequentially numbered 0 to 3 in ascending order of time. In frequency domain, one SSB occupies 240 contiguous subcarriers, and the 240 subcarriers are sequentially numbered 0 to 239 in ascending order of frequencies.

It should be noted that numbers of the four OFDM symbols are numbers relative to a time domain start position of the SSB, and numbers of the 240 subcarriers are numbers relative to a frequency domain start position of the SSB. For example, a mapping mode of the PSS, the SSS, the PBCH, and a demodulation reference signal (demodulation reference signal, DMRS) of the PBCH is shown in Table 1.

**Table 1**

| Channel or signal | OFDM symbol number (OFDM symbol number *l* relative to the start of an SS/PBCH block) | Subcarrier number (Subcarrier number *k* relative to the start of an SS/PBCH block) |
|---|---|---|
| PSS | 0 | 56, 57, ..., and 182 |
| SSS | 2 | 56, 57, ..., and 182 |
| Set to 0 | 0 | 0, 1, ..., and 55; and 183, 184, ..., and 239 |
| | 2 | 48, 49, ..., and 55; and 183, 184, ..., and 191 |
| PBCH | 1 and 3 | 0, 1, ..., and 239 |
| | 2 | 0, 1, ..., and 47; and 192, 193, ..., and 239 |
| DMRS on the PBCH | 1 and 3 | 0 + *v,* 4 + *v,* 8 + *v, ... , and* 236 + *v* |
| | 2 | 0 +*v*, 4 + *v*, 8 + *v*, ... , *and* 44 + *v*; and 192 *+ v,* 196 *+ v,* ... , *and* 236 *+ v* |

The DMRS on the PBCH is mapped to one subcarrier in every four subcarriers, and *v* represents an offset of the subcarrier used for mapping the DMRS in every four subcarriers. For example, a value of *v* may be 0, 1, 2, or 3, respectively representing that the DMRS is mapped to a 1^{st} subcarrier, a 2^{nd} subcarrier, a 3^{rd} subcarrier, and a 4^{th} subcarrier in every four subcarriers.

Based on Table 1, a structure of the SSB may be shown in FIG. 2. The PBCH occupies three OFDM symbols in time domain, occupies subcarriers that are numbered 0 to 239 in frequency domain and correspond to OFDM symbols numbered 1 and 3, and occupies subcarriers that are numbered 0 to 47 and 192 to 239 in frequency domain and correspond to an OFDM symbol numbered 2.

In addition, a mapping order of modulation symbols, obtained based on information carried by the PBCH, on a time-frequency resource occupied by the PBCH complies with a rule of "first frequency domain and then time domain". Based on the examples in Table 1 and FIG. 1, first, modulation symbols are mapped to the subcarriers 0 to 239 on the OFDM symbol 1 in ascending order of the subcarrier numbers; then, modulation symbols are mapped to the subcarriers 0 to 47 and the subcarriers 192 to 239 on the OFDM symbol 2 in ascending order of the subcarrier numbers; and finally, modulation symbols are mapped to the subcarriers 0 to 239 on the OFDM symbol 3 in ascending order of the subcarrier numbers.

### 3. Internet of things (internet of things, IoT)

The IoT is an "internet through which things are connected to each other". The IoT extends a user end of the internet to objects for information exchange and communication. Such a communication manner is also referred to as machine-type communication (machine-type communication, MTC). A communication node is referred to as an IoT terminal or an IoT device. Typical IoT application includes an internet of vehicles, a smart community, industrial detection monitoring, smart meter reading, a smart grid, smart agriculture, smart transportation, a smart home, environment detection, and various other aspects.

The internet of things needs to be applied to a plurality of types of scenarios, for example, an outdoor-to-indoor scenario and an overground-to-underground scenario. Therefore, many special requirements are imposed on a design of the internet of things. For example, an IoT terminal in some scenarios is used in an environment with poor coverage, for example, an electric meter or a water meter is usually installed indoors and even in a place, for example, a basement, with a quite poor wireless network signal. Therefore, a coverage enhancement technology is needed to resolve this problem. Alternatively, a quantity of IoT terminals in some scenarios is far greater than a quantity of devices for human-to-human communication. In other words, large-scale deployment is needed. Therefore, the IoT terminals need to be obtained and used at quite low costs. Alternatively, a data packet transmitted by an IoT terminal in some scenarios is quite small, and is insensitive to a latency. Therefore, an IoT terminal with a low rate needs to be supported. Alternatively, in most cases, an IoT terminal is powered by using a battery. However, in many scenarios, the IoT terminal is further needed to be used for at least 10 years without replacing the battery. Therefore, the IoT terminal needs to operate with extremely low electric power consumption.

In other words, MTC has requirements such as coverage enhancement, low costs, a low rate, and low energy consumption. A narrower bandwidth is the most direct way to reduce terminal costs. Therefore, there may be a plurality of types of terminals with different bandwidths in a network. For example, in a 4th generation (4th generation, 4G) long term evolution (long term evolution, LTE) system, a conventional LTE terminal and a narrowband IoT (narrowband internet of things, NB-IoT) exist. In an NR system, an eMBB terminal and a reduced capability (reduced capability, RedCap) terminal exist.

In the LTE system, a network side separately sends an PBCH for the conventional LTE terminal and the NB-IoT terminal. Although this solution effectively ensures performance of initial access of the NB-IoT terminal, common signal overheads on the network side are greatly increased. Therefore, in a future internet of things system, an ideal objective is still a broadband-narrowband integrated design. In other words, the network side sends a set of PBCHs for access of a broadband terminal and a narrowband terminal.

However, in the NR system, if a narrowband terminal is enabled to directly receive a PBCH designed for a conventional terminal (for example, the eMBB terminal), PBCH receiving performance of the narrowband terminal greatly deteriorates.

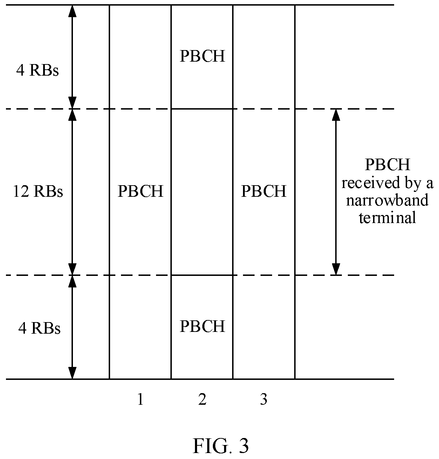

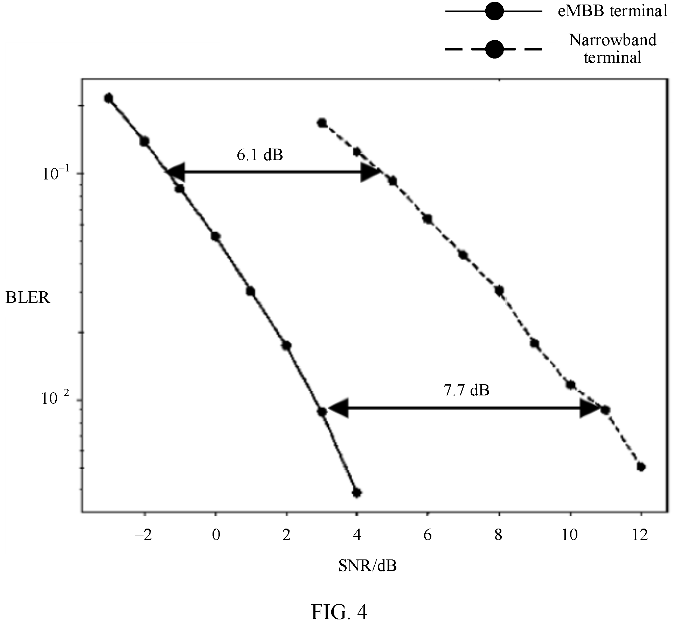

A subcarrier spacing of 30 kHz is used as an example. A bandwidth occupied by the designed PBCH shown in FIG. 2 is 7.2 megahertz (megahertz, MHz). If a narrowband terminal whose bandwidth is 5 MHz (both a radio frequency bandwidth and a baseband bandwidth are 5 MHz) exists in the system, the narrowband terminal can receive only a part of the PBCH. It is assumed that the narrowband terminal and the conventional terminal perform access at a same synchronization raster position. In this case, as shown in FIG. 3, the narrowband terminal receives 144 subcarriers (12 RBs, with a bandwidth of 4.32 MHz) at a center of the PBCH. In this case, PBCH receiving performance of the narrowband terminal and the conventional terminal is shown in FIG. 4. Refer to FIG. 4. When the narrowband terminal and the eMBB terminal have a same block error rate (block error rate, BLER), a difference between signal-to-noise ratios (signal-to-noise ratios, SNRs) of the narrowband terminal and the eMBB terminal is large. When the BLER is 10⁻², the difference between the SNRs of the narrowband terminal and the eMBB terminal reaches 7.7 decibels (dB).

However, in practice, the narrowband terminal with the bandwidth of 5 MHz can receive information on 288 REs on 144 subcarriers (in addition to DMRSs, PBCH modulation symbols may be received on 216 REs). The conventional terminal can receive the complete PBCH, to be specific, receive information on 576 REs occupied by the PBCH (in addition to DMRSs, PBCH modulation symbols may be received on 432 REs).

In other words, in comparison with the conventional terminal, the narrowband terminal loses 50% of resources, that is, 50% of the information. From the perspective of resource conversion, an ideal performance difference corresponding to the loss of 50% of resources needs to be 3 dB. However, based on a result in FIG. 4, a performance difference between the narrowband terminal and the conventional terminal reaches 7.7 dB, that is, receiving performance of the narrowband terminal greatly deteriorates.

Based on this, this application provides a communication method, to map *M*₁ consecutive symbols in *M* symbols (that is, modulation symbols) of a PBCH to a first time-frequency resource, and map remaining *M* - *M*₁ symbols to a second time-frequency resource. The first time-frequency resource and the second time-frequency resource form a PBCH time-frequency resource. In addition, subcarriers occupied by the first time-frequency resource and the second time-frequency resource do not overlap, and a union set of OFDM symbols occupied by the first time-frequency resource and the second time-frequency resource is OFDM symbols occupied by the PBCH time-frequency resource.

In other words, the PBCH time-frequency resource is divided into two parts in this application, the *M*₁ consecutive symbols of the PBCH are mapped to one part (namely, the first time-frequency resource) of the resource, and the remaining *M* - *M*₁ symbols are mapped to the other part (namely, the second time-frequency resource) of the resource. When a narrowband terminal may receive information carried on the first time-frequency resource, the narrowband terminal can obtain the *M*₁ consecutive symbols of the PBCH, to obtain a relatively complete part of system information, thereby improving PBCH receiving performance of the narrowband terminal.

The technical solutions in embodiments of this application may be applied to various communication systems. The communication system may be a 3rd generation partnership project (third generation partnership project, 3GPP) communication system, for example, a 4G system like an LTE system, a 5G system like an NR system, an LTE and 5G hybrid networking system, a non-terrestrial network (non-terrestrial network, NTN), or another next-generation communication system, for example, a 5.5G system or a 6th generation (6th generation, 6G) system. Alternatively, the communication system may be a non-3GPP communication system. This is not limited.

The foregoing communication systems applicable to this application are merely examples for description, and the communication systems applicable to this application are not limited thereto. The communication systems provided in this application constitute no limitation on the solutions of this application. This applies throughout and will not be repeated below.

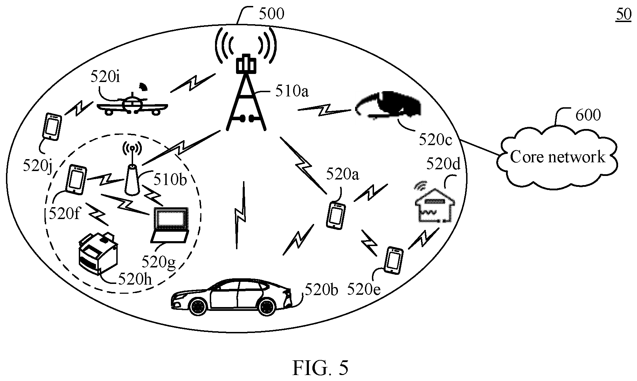

FIG. 5 is a diagram of a possible and non-limiting system. As shown in FIG. 5, the communication system 50 includes a radio access network (radio access network, RAN) 500 and a core network (core network, CN) 600. The RAN 500 includes at least one RAN node (for example, 510a and 510b in FIG. 5, which are collectively referred to as 510) and at least one terminal (for example, 520a to 520j in FIG. 5, which are collectively referred to as 520). The RAN 500 may further include another RAN node, for example, a wireless relay device and/or a wireless backhaul device (not shown in FIG. 5).

Terminals in embodiments of this application may include a first-type terminal and a second-type terminal. A maximum operating bandwidth/maximum receive bandwidth of the first-type terminal is less than a maximum operating bandwidth/maximum receive bandwidth of the second-type terminal. The second-type terminal may also be referred to as a conventional terminal, a common terminal, a non-reduced-capability terminal, or a normal (normal) terminal.

For example, the maximum operating bandwidth/maximum receive bandwidth of the first-type terminal may be 5 MHz or 3 MHz, or certainly may be another bandwidth. This is not specifically limited in this application. First-type terminals may include a reduced capability (reduced capability, RedCap) terminal, an enhanced RedCap (enhanced, eRedCap) terminal, an NR light terminal, a long range radio (long range radio, LoRa) terminal, an NB-IoT terminal, a Weightless terminal, a Sigfox terminal, another narrowband IoT terminal, and the like. The second-type terminal may be an enhanced mobile broadband (enhanced mobile broadband, eMBB) terminal.

In the communication system shown in FIG. 5, the terminal 520 is connected to the RAN node 510 in a wireless manner. The RAN node 510 is connected to the core network 600 in a wireless or wired manner. A core network device in the core network 600 and the RAN node 510 in the RAN 500 may be different physical devices respectively, or may be a same physical device that integrates a logical function of the core network and a logical function of the radio access network.

The RAN 500 may be a 3GPP-related cellular system, for example, a 4G or 5G mobile communication system, or a future-oriented evolved system (for example, a 6G mobile communication system). The RAN 500 may alternatively be an open access network (open RAN, O-RAN or ORAN), a cloud radio access network (cloud radio access network, CRAN), or a wireless fidelity (wireless fidelity, Wi-Fi) system. The RAN 500 may alternatively be a communication system that integrates two or more of the foregoing systems.

The RAN node 510 may also be referred to as an access network device, a RAN entity, an access node, or the like sometimes, and forms a part of the communication system, to help the terminal implement radio access. A plurality of RAN nodes 510 in the communication system 10 may be nodes of a same type, or may be nodes of different types. In some scenarios, roles of the RAN node 510 and the terminal 520 are relative to each other. For example, the network element 520i in FIG. 5 may be a helicopter or an uncrewed aerial vehicle, and may be configured as a mobile base station. For the terminal 520j that accesses the RAN 500 via the network element 520i, the network element 520i is a base station. However, for the base station 510a, the network element 520i is a terminal. The RAN node 510 and the terminal 520 are both referred to as communication apparatuses sometimes. For example, the network elements 510a and 510b in FIG. 5 may be understood as communication apparatuses having a function of a base station, and the network elements 520a to 520j may be understood as communication apparatuses having a function of a terminal.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The RAN node may be a macro base station (for example, 510a in FIG. 5), a micro base station or an indoor base station (for example, 510b in FIG. 5), a relay node or a donor node, or a radio controller in a CRAN scenario. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU). All or a part of functions of the RAN node in this application may alternatively be implemented by using a software function running on hardware, or may be implemented by using an instantiated virtualization function on a platform (for example, a cloud platform). Alternatively, the RAN node in this application may be a logical node, a logical module, or software that can implement all or a part of functions of the RAN node.

In another possible scenario, a plurality of RAN nodes collaborate to assist the terminal in implementing radio access, and different RAN nodes respectively implement some functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal may also be referred to as a terminal device, user equipment (user equipment, UE), a mobile station, a mobile terminal, or the like. The terminal may be widely used in various scenarios, for example, device-to-device (device-to-device, D2D) communication, vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, a smart grid, smart furniture, smart office, a smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

It should be noted that the communication systems described in embodiments of this application are intended to describe the technical solutions in embodiments of this application more clearly, but do not constitute a limitation on the technical solutions provided in embodiments of this application. It can be learned by a person of ordinary skill in the art that the technical solutions provided in embodiments of this application are also applicable to similar technical problems with evolution of a network architecture and emergency of a new service scenario.

With reference to the communication system shown in FIG. 5, the following describes a communication method provided in an embodiment of this application by using interaction between a terminal and a RAN node as an example. It should be noted that names of messages, parameters, information, or the like between the terminal and the RAN node in the following embodiments of this application are merely examples, and there may be other names in another embodiment. This is not specifically limited in the method provided in this application.

It may be understood that in embodiments of this application, the terminal or the RAN node may perform some or all steps in embodiments of this application. These steps or operations are merely examples. In embodiments of this application, other operations or various variations of the operations may be further performed. In addition, the steps may be performed in an order different from that presented in embodiments of this application, and not all of the operations in embodiments of this application may be necessarily performed.

It may be understood that, in this application, an example in which the RAN node and the terminal are used as execution bodies of an interaction example is used for description. However, the execution bodies of the interaction example are not limited in this application. For example, the method performed by the RAN node in this application may alternatively be performed by a module (for example, a chip, a chip system, or a processor) used in the RAN node, or may be implemented by a logical node, a logical module, or software that can implement all or a part of functions of the RAN node. The method performed by the terminal in this application may alternatively be performed by a module (for example, a chip, a chip system, or a processor) used in the terminal, or may be implemented by a logical node, a logical module, or software that can implement all or a part of functions of the terminal.

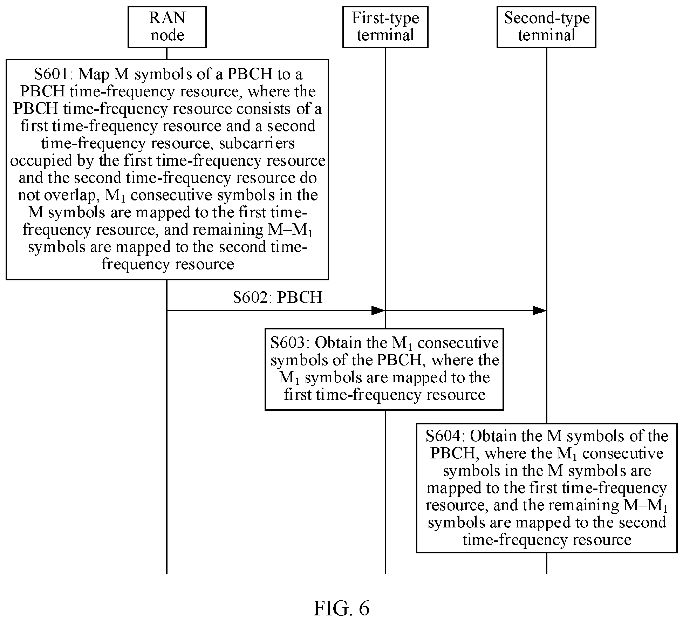

FIG. 6 is a flowchart of a communication method according to an embodiment of this application. The communication method may include the following steps.

S601: A RAN node maps *M* symbols of a PBCH to a PBCH time-frequency resource, where *M* is a positive integer greater than 1.

The PBCH time-frequency resource consists of a first time-frequency resource and a second time-frequency resource, and frequency domain positions of the first time-frequency resource and the second time-frequency resource do not overlap. *M*₁ symbols in the *M* symbols are mapped to the first time-frequency resource, remaining *M* - *M*₁ symbols are mapped to the second time-frequency resource, and *M*₁ is a positive integer greater than 1. For example, the PBCH time-frequency resource may be understood as a time-frequency resource occupied by the PBCH.

It may be understood that the symbol is a modulation symbol or a complex-valued symbol, where the complex-valued symbol may be a complex-valued symbol obtained through bit modulation or a complex-valued symbol obtained through bit scrambling and modulation. In the following embodiments of this application, unless otherwise specified, the symbol is the modulation symbol or the complex-valued symbol.

It should be noted that the modulation symbol/complex-valued symbol and an OFDM symbol are two different concepts. The modulation symbol/complex-valued symbol carries information, and the OFDM symbol represents a resource in time domain.

In a possible implementation, the *M* symbols of the PBCH may also be referred to as a PBCH symbol set or symbol sequence. The *M* symbols may be represented as *d*_{PBCH}(0), *d*_{PBCH}(1), *d*_{PBCH}(2), ... , *and d*_{PBCH}(*M* - 1).

In a possible implementation, the PBCH time-frequency resource consists of the first time-frequency resource and the second time-frequency resource. It may also be understood as that the PBCH time-frequency resource may be divided into two parts: the first time-frequency resource and the second time-frequency resource.

In a possible implementation, that the frequency domain positions of the first time-frequency resource and the second time-frequency resource do not overlap may be understood as that subcarriers occupied by the first time-frequency resource and the second time-frequency resource do not overlap, or RBs occupied by the first time-frequency resource and the second time-frequency resource do not overlap. That the subcarriers occupied by the first time-frequency resource and the second time-frequency resource do not overlap may also be understood as that indexes of subcarriers included in the first time-frequency resource are different from indexes of subcarriers included in the second time-frequency resource.

In a possible implementation, a union set of OFDM symbols occupied by the first time-frequency resource and the second time-frequency resource is OFDM symbols occupied by the PBCH time-frequency resource. For example, the OFDM symbols occupied by the first time-frequency resource and the second time-frequency resource may partially or completely overlap. When the OFDM symbols occupied by the first time-frequency resource and the second time-frequency resource completely overlap, it may be considered that the OFDM symbols occupied by the first time-frequency resource and the second time-frequency resource are the same.

In a possible implementation, the first time-frequency resource or the second time-frequency resource may be understood as two types of time-frequency resources. Subcarriers occupied by the first time-frequency resource are contiguous in frequency domain. In other words, the first time-frequency resource consists of a plurality of contiguous subcarriers in frequency domain. The second time-frequency resource may be understood as a resource in the PBCH time-frequency resource other than the first time-frequency resource. In other words, resources in the PBCH time-frequency resource other than the first time-frequency resource may be collectively referred to as second time-frequency resources. Subcarriers occupied by the second time-frequency resource may be contiguous, or may be non-contiguous. This is not limited.

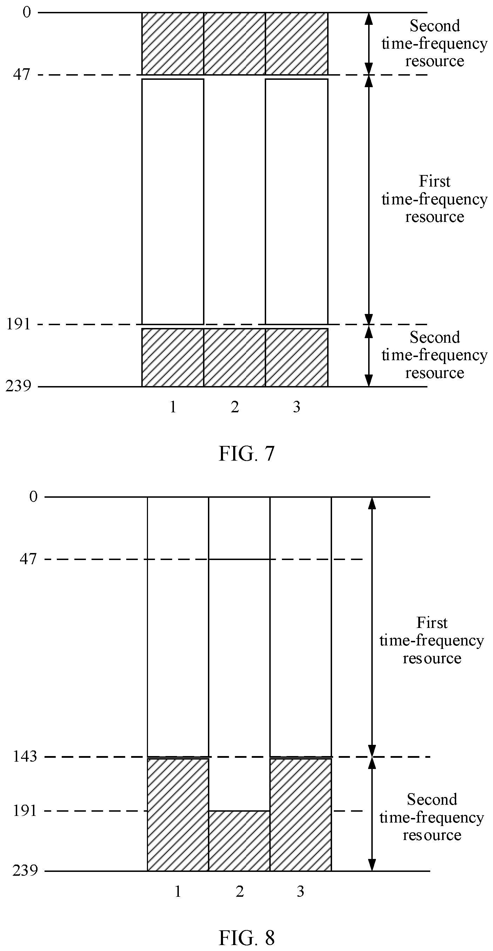

In a possible example, a frequency domain resource of the first time-frequency resource may be a frequency domain resource in a middle part of the PBCH time-frequency resource, and frequency domain resources of the second time-frequency resource include some frequency domain resources at a low-frequency edge and a high-frequency edge of the PBCH time-frequency resource. An example in which the PBCH time-frequency resource is shown in Table 1 is used. Numbers of the OFDM symbols and the subcarriers separately occupied by the first time-frequency resource and the second time-frequency resource may be shown in Table 2. Correspondingly, a diagram of positions of the first time-frequency resource and the second time-frequency resources may be shown in FIG. 7.

For example, in embodiments of this application, the number may also be referred to as an index or a sequence number, and the three may be replaced with each other.

It may be understood that the number of the OFDM symbol is a number relative to a time domain start position of an SSB, and the number of the subcarrier is a number relative to a frequency domain start position of the SSB.

**Table 2**

| | OFDM symbol number (OFDM symbol number *l* relative to the start of an SS/PBCH block) | Subcarrier number (Subcarrier number *k* relative to the start of an SS/PBCH block) |
|---|---|---|
| First time-frequency resource | 1 and 3 | 48, 49, ..., and 191 |
| Second time-frequency resource | 1, 2, and 3 | 0, 1, ..., and 47; and 192, 193, ..., and 239 |

To be specific, the first time-frequency resource is {OFDM symbol 1, subcarriers 48, 49, ..., and 191} and {OFDM symbol 3, subcarriers 48, 49, ..., and 191}. The second time-frequency resource is {OFDM symbol 1, subcarriers 1, 49, ..., 47, 192, 193, ..., and 239}, {OFDM symbol 2, subcarriers 1, 49, ..., 47, 192, 193, ..., and 239}, and {OFDM symbol 3, subcarriers 1, 49, ..., 47, 192, 193, ..., and 239}.

In another possible example, a frequency domain resource of the first time-frequency resource is a part of a frequency domain resource at a low-frequency edge of the PBCH, and a frequency domain resource of the second time-frequency resource is a remaining frequency domain resource of the PBCH time-frequency resource. An example in which the PBCH time-frequency resource is shown in Table 1 is used. Numbers of the OFDM symbols and the subcarriers separately occupied by the first time-frequency resource and the second time-frequency resource may be shown in Table 3. Correspondingly, a diagram of positions of the first time-frequency resource and the second time-frequency resources may be shown in FIG. 8.

**Table 3**

| | OFDM symbol number (OFDM symbol number *l* relative to the start of an SS/PBCH block) | Subcarrier number (Subcarrier number *k* relative to the start of an SS/PBCH block) |
|---|---|---|
| First time-frequency resource | 1 and 3 | 0, 1, ..., and 143 |
| | 2 | 0, 1, ..., and 47 |
| Second time-frequency resource | 1 and 3 | 144, 145, ..., and 239 |
| | 2 | 192, 193, ..., and 239 |

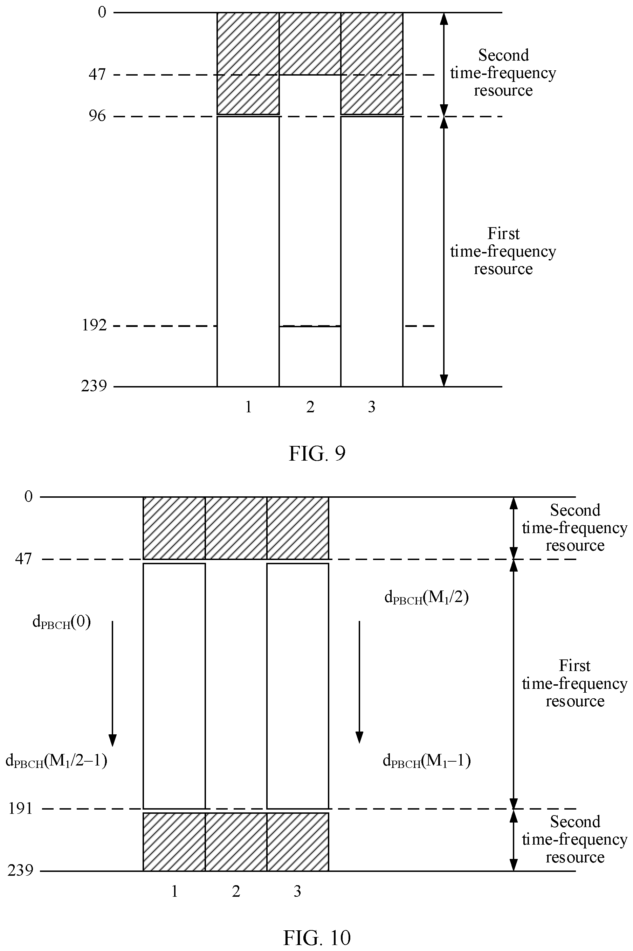

In still another possible example, a frequency domain resource of the first time-frequency resource is a part of a frequency domain resource at a high-frequency edge of the PBCH, and a frequency domain resource of the second time-frequency resource is a remaining frequency domain resource of the PBCH time-frequency resource. An example in which the PBCH time-frequency resource is shown in Table 1 is used. Numbers of the OFDM symbols and the subcarriers separately occupied by the first time-frequency resource and the second time-frequency resource may be shown in Table 4. Correspondingly, a diagram of positions of the first time-frequency resource and the second time-frequency resources may be shown in FIG. 9.

**Table 4**

| | OFDM symbol number (OFDM symbol number *l* relative to the start of an SS/PBCH block) | Subcarrier number (Subcarrier number *k* relative to the start of an SS/PBCH block) |
|---|---|---|
| First time-frequency resource | 1 and 3 | 96, 97, ..., and 239 |
| | 2 | 192, 193, ..., and 239 |
| Second time-frequency resource | 1 and 3 | 0, 1, ..., and 95 |
| | 2 | 0, 1, ..., and 47 |

In a possible implementation, a bandwidth of the first time-frequency resource is less than or equal to a maximum receive bandwidth/maximum operating bandwidth of a first-type terminal. That is, the first-type terminal has a capability of receiving all information on the first time-frequency resource. A bandwidth of the PBCH time-frequency resource is greater than the maximum receive bandwidth/maximum operating bandwidth of the first-type terminal, and is less than or equal to a maximum receive bandwidth/maximum operating bandwidth of a second-type terminal. In other words, the first-type terminal cannot receive all the information on the PBCH time-frequency resource, and the second-type terminal has a capability of receiving all the information on the PBCH time-frequency resource.

For example, the maximum receive bandwidth/maximum operating bandwidth of the first-type terminal is 5 MHz, and the maximum receive bandwidth/maximum operating bandwidth of the second-type terminal is greater than or equal to 10 MHz. When a subcarrier spacing is 30 kHz, the first time-frequency resource occupies 144 subcarriers, the bandwidth of the first time-frequency resource is 4.32 MHz, the PBCH time-frequency resource occupies 240 subcarriers, and the bandwidth of the PBCH time-frequency resource is 7.2 MHz.

In a possible implementation, the first time-frequency resource may be understood as a common PBCH time-frequency resource of the first-type terminal and the second-type terminal, and the second time-frequency resource may be understood as a PBCH time-frequency resource dedicated to the second-type terminal relative to the first-type terminal. For example, the common PBCH time-frequency resource may be understood as a PBCH time-frequency resource that can be received by both the first-type terminal and the second-type terminal. The PBCH time-frequency resource dedicated to the second-type terminal relative to the first-type terminal may be understood as a PBCH time-frequency resource that can be received by the second-type terminal but cannot be received by the first-type terminal.

In a possible implementation, the *M*₁ symbols mapped to the first time-frequency resource are *M*₁ consecutive symbols in the *M* symbols of the PBCH. For example, the *M*₁ consecutive symbols are first *M*₁ symbols in the *M* symbols, namely, *d*_{PBCH}(0), *d*_{PBCH}(1), ... , and *d*_{PBCH}(*M*₁ - 1). Correspondingly, the *M - M*₁ symbols mapped to the second time-frequency resource are last *M - M*₁ symbols in the *M* symbols, namely, *d*_{PBCH}(*M*₁), *d*_{PBCH}(*M*₁ *+* 1), ..., *and d*_{PBCH}(*M*)*.* Alternatively, the *M*₁ consecutive symbols are last *M*₁ symbols in the *M* symbols, namely, *D*_{PBCH}(*M - M*₁)), *d*_{PBCH}(*M - M*₁ *+* 1), ... , *and d*_{PBCH}(*M -* 1)*.* Correspondingly, the *M* - *M*₁ symbols mapped to the second time-frequency resource are first *M* - *M*₁ symbols in the *M* symbols, namely, *d*_{PBCH}(0), *d*_{PBCH}(1)), ... , *and d*_{PBCH}(*M - M*₁ - 1)*.*

In another possible implementation, the *M*₁ symbols mapped to the first time-frequency resource are *M*₁ symbols in *M*₂ consecutive symbols of the PBCH, and *M*₂ > *M*₁*.* For example, the *M*₂ consecutive symbols are first *M*₂ symbols in the *M* symbols or last *M*₂ symbols in the *M* symbols. It may be understood that, in this possible implementation, the *M*₁ symbols mapped to the first time-frequency resource may be *M*₁ consecutive symbols, or may be *M*₁ inconsecutive symbols. This is not specifically limited in this application.

In a possible implementation, *M*₁ is a quantity of valid REs in the first time-frequency resource. The valid RE may be understood as an RE in the first time-frequency resource other than an RE used for mapping a reference signal, and the reference signal is a DMRS or the reference signal may include but is not limited to a DMRS. Alternatively, the valid RE may be understood as an RE in the first time-frequency resource other than an RE not used for mapping a symbol of the PBCH, and the RE not used for mapping the symbol of the PBCH may include an RE used for mapping a reference signal or an idle RE (for example, an RE that is set to 0).

In a possible implementation, a mapping order of the *M*₁ symbols in the *M* symbols of the PBCH on the first time-frequency resource is the same as a mapping order of the remaining *M - M*₁ symbols on the second time-frequency resource. Certainly, the mapping order of the *M*₁ symbols on the first time-frequency resource may alternatively be different from the mapping order of the remaining *M - M*₁ symbols on the second time-frequency resource.

In a possible example, the mapping order of the *M*₁ symbols on the first time-frequency resource is: first in ascending order of subcarrier indexes and then in ascending order of OFDM symbol indexes. An example in which FIG. 7 is the diagram of the positions of the first time-frequency resource and the second time-frequency resources, and the *M*₁ consecutive symbols mapped to the first time-frequency resource are the first *M*₁ symbols in the *M* symbols is used. As shown in FIG. 10, the RAN node maps *d*_{PBCH}(0), *d*_{PBCH}(1), ... , *and d*_{PBCH}(*M*₁/2- 1) to valid REs in {OFDM symbol 1, subcarriers 48, 49, ..., and 191}, and maps *d*_{PBCH}(*M*₁/2), *d*_{PBCH}(*M*₁/2 + 1), ... , *and d*_{PBCH}(*M*₁ - 1) to valid REs in {OFDM symbol 3, subcarries 48, 49, ..., and 191}.

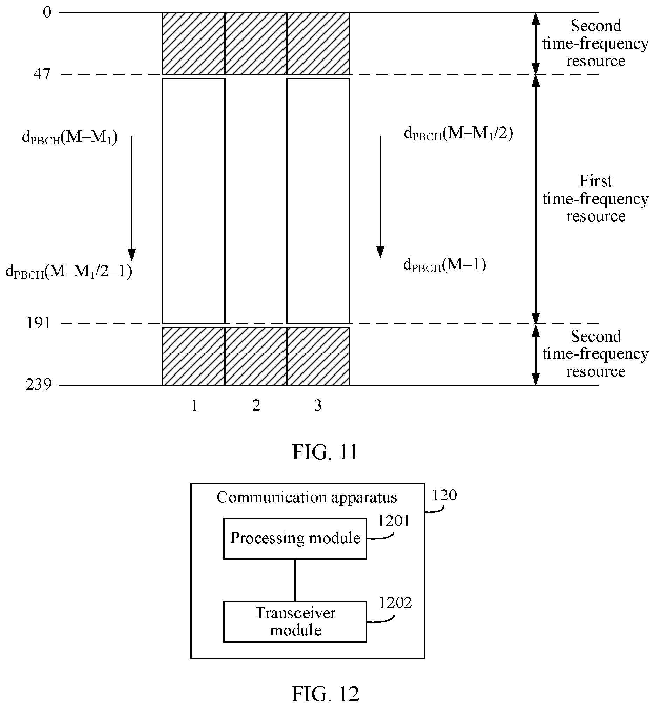

Alternatively, an example in which FIG. 7 is the diagram of the positions of the first time-frequency resource and the second time-frequency resources, and the *M*₁ consecutive symbols mapped to the first time-frequency resource are the last *M*₁ symbols in the *M* symbols is used. As shown in FIG. 11, the RAN node maps *d*_{PBCH}(*M* - *M*₁), ... , *and d*_{PBCH}(*M* - *M*₁/2- 1) to valid REs in {OFDM symbol 1, subcarriers 48, 49, ..., and 191}, and maps *d*_{PBCH}(*M* - *M*₁/2), ... , *and d*_{PBCH}(*M* - 1) to valid REs in {OFDM symbol 3, subcarriers 48, 49, ..., and 191}.

In another possible example, the mapping order of the *M*₁ symbols on the first time-frequency resource is: first in descending order of subcarrier indexes and then in descending order of OFDM symbol indexes; first in ascending order of subcarrier indexes and then in descending order of OFDM symbol indexes; or first in descending order of subcarrier indexes and then in ascending order of OFMD symbol indexes.

For the mapping order of the remaining *M* - *M*₁ symbols on the second time-frequency resource, refer to the mapping order of the *M*₁ symbols on the first time-frequency resource. Details are not described herein again.

Based on the foregoing solution, the PBCH time-frequency resource is divided into two parts in this application, the *M*₁ consecutive symbols of the PBCH are mapped to one part (namely, the first time-frequency resource) of the resource, and the remaining *M* - *M*₁ symbols are mapped to the other part (namely, the second time-frequency resource) of the resource. When a narrowband terminal may receive the information carried on the first time-frequency resource, the narrowband terminal can obtain the *M*₁ consecutive symbols of the PBCH, so that there is a higher probability of demodulating complete system information, thereby improving PBCH receiving performance of the narrowband terminal.

For example, the subcarrier spacing is 30 kHz, and the OFDM symbols and the subcarriers occupied by the first time-frequency resource and the second time-frequency resource are shown in Table 2. When a BLER is 10⁻², and the *M*₁ symbols mapped to the first time-frequency resource are the first *M*₁ symbols in the *M* symbols of the PBCH, an SNR of receiving the PBCH by the second-type terminal, an SNR of receiving the PBCH by the first-type terminal when the symbols of the PBCH are mapped in a current NR manner, and an SNR of receiving the PBCH by the first-type terminal when the symbols of the PBCH are mapped in a manner in this application are shown in Table 5.

**Table 5**

| | SNR of receiving the PBCH by the second-type terminal | SNR of receiving the PBCH by the first-type terminal when the symbols of the PBCH are mapped in a current NR manner | SNR of receiving the PBCH by the first-type terminal when the *M*₁ symbols mapped to the first time-frequency resource are the first *M*₁ symbols in the *M* symbols of the PBCH |
|---|---|---|---|
| BLER= 10⁻² | 2.8 dB | 10.5 dB | 6.3 dB |

For another example, the subcarrier spacing is 30 kHz, and the OFDM symbols and the subcarriers occupied by the first time-frequency resource and the second time-frequency resource are shown in Table 2. When a BLER is 10⁻², and the *M*₁ symbols mapped to the first time-frequency resource are the last *M*₁ symbols in the *M* symbols of the PBCH, an SNR of receiving the PBCH by the second-type terminal, an SNR of receiving the PBCH by the first-type terminal when the symbols of the PBCH are mapped in a current NR manner, and an SNR of receiving the PBCH by the first-type terminal when the symbols of the PBCH are mapped in a manner in this application are shown in Table 6.

**Table 6**

| | SNR of receiving the PBCH by the second-type terminal | SNR of receiving the PBCH by the first-type terminal when the symbols of the PBCH are mapped in a current NR manner | SNR of receiving the PBCH by the first-type terminal when the *M*₁ symbols mapped to the first time-frequency resource are the first *M*₁ symbols in the *M* symbols of the PBCH |
|---|---|---|---|
| BLER= 10⁻² | 2.8 dB | 10.5 dB | 5.5 dB |

It can be learned from Table 5 that, when the BLER is 10⁻², a difference between the SNRs of receiving the PBCH by the second-type terminal and the first-type terminal is 3.5 dB, which is close to an ideal performance difference 3 dB. It can be learned from Table 6 that, when the BLER is 10⁻², a difference between the SNRs of receiving the PBCH by the second-type terminal and the first-type terminal is 2.7 dB, which is even slightly lower than the ideal performance difference. In other words, the solution based on this application can significantly improve the PBCH receiving performance of the narrowband terminal.

In a possible implementation, before step S601, the RAN node needs to determine the *M* symbols of the PBCH. For example, the RAN node may sequentially perform encoding, rate matching, scrambling, and modulation on information bits of the PBCH, to obtain the *M* symbols of the PBCH. The information bits include a payload (payload) bit (for example, a scrambled payload bit) and a cyclic redundancy check (cyclic redundancy check, CRC) bit. The CRC bit may also be referred to as a CRC check bit. The RAN node scrambles the payload bit to obtain the scrambled payload bit. Then, the CRC bit is obtained based on the scrambled payload bit and a CRC generator polynomial of the PBCH.

The foregoing implementation of S601 may be considered as a new modulation symbol mapping mode provided in this application. In addition, this application further provides another implementation of S601. In this manner, when the *M* symbols of the PBCH are represented as *d*_{PBCH}(0), *d*_{PBCH}(1), *d*_{PBCH}(2), ... , *and d*_{PBCH}(*M -* 1), a mapping order of the *M* symbols, namely, *d*_{PBCH}(0), *d*_{PBCH}(1), *d*_{PBCH}(2), ... , *and d*_{PBCH}(*M -* 1), to the PBCH time-frequency resource is: first in ascending order of subcarrier indexes and then in ascending order of OFDM symbol indexes.

In this scenario, before step S601, the RAN node may sequentially perform encoding, rate matching, scrambling, and modulation on information bits of the PBCH, to obtain the *M* symbols of the PBCH. An example in which a modulation scheme of the PBCH is *Q* order modulation is used. For example, *Q* is equal to 2, modulation of the PBCH is QPSK modulation, and the *M* symbols of the PBCH may be obtained through scrambling and modulation on *Q * M* encoded bits. An example in which *Q* is equal to 2 is used. The encoded bits may be represented as *c*(0), *c*(1), *c*(2), ..., *and c*(2*M -* 1).

In a possible manner, after the encoded bits are obtained and before scrambling and modulation are performed, Q * *M*₁ consecutive bits in the *Q * M* encoded bits may be changed to positions of sequence numbers or indexes of encoded bits corresponding to the first time-frequency resource, and remaining *Q* * *M* - Q * *M*₁ bits may be changed to positions of sequence numbers or indexes of encoded bits corresponding to the second time-frequency resource. For example, the Q * *M*₁ consecutive bits are first Q * *M*₁ bits in the *Q* * *M* encoded bits. For example, the foregoing operation of changing rankings of the encoded bits may be referred to as bit interleaving. In other words, after the encoded bits are obtained and before scrambling and modulation are performed, bit interleaving may be performed.

An example in which *Q* = 2, and the first time-frequency resource is a time-frequency resource at a center of the PBCH, for example, the first time-frequency resource occupies 144 subcarriers, is used. In this case, 2 * *M*₁ is equal to 432, and 2 * *M* = 864. The sequence numbers or the indexes of the encoded bits corresponding to the first time-frequency resource are 72 to 287 and 576 to 791, and the sequence numbers or the indexes of the encoded bits corresponding to the second time-frequency resource are 0 to 71, 312 to 575, and 792 to 863. Therefore, the RAN node changes first 432 bits in the encoded bits to positions of bit sequence numbers or indexes that are 72 to 287 and 576 to 791, and changes last 432 bits in the encoded bits to positions of bit sequence numbers or indexes that are 0 to 71, 312 to 575, and 792 to 863.

Based on this manner, after the encoded bits are scrambled and modulated, a modulation symbol with a high bit weight is mapped to a time-frequency resource received by the narrowband terminal, so that the narrowband terminal has a higher probability of demodulating the complete system information, thereby improving the PBCH receiving performance of the narrowband terminal.

In a possible implementation, after step S601, the communication method provided in this application further includes the following step S602 to step S604.

S602: The RAN node sends the PBCH. Correspondingly, the first-type terminal receives a part of the PBCH, and the second-type terminal receives the PBCH.

It may be understood that the first-type terminal receives the part of the PBCH on the first time-frequency resource. In other words, the first-type terminal receives the part of the PBCH carried on the first time-frequency resource. The second-type terminal receives the complete PBCH on the PBCH time-frequency resource.

In a possible implementation, "sending" in this application may be understood as that one device performs sending to at least one other device, or may be understood as that one logical module/unit in a device performs outputting or sending to at least one other logical module/unit.

For example, that the RAN node sends the PBCH may also be understood as that the RAN node sends a radio signal carrying the PBCH. After step S601, the RAN node may sequentially perform digital-to-analog conversion, inverse fast Fourier transform (inverse fast Fourier transform, IFFT), cyclic prefix (cyclic prefix, CP) addition, and the like on symbols carried on all subcarriers on each OFDM symbol of the PBCH time-frequency resource, to obtain the radio signal carrying the PBCH.

Alternatively, for another example, that the RAN node sends the PBCH may also be understood as that a baseband unit (for example, a base station chip) of the RAN node outputs or sends the PBCH to a radio frequency unit (for example, a radio frequency chip) of the RAN node.

Optionally, that the first-type terminal receives the part of the PBCH may alternatively be understood as receiving the radio signal carrying the part of the PBCH, that is, receiving the radio signal on the first time-frequency resource, where the radio signal carries the part of PBCH; or may be understood as demodulating the part of the PBCH or detecting the part of the PBCH. That the second-type terminal receives the PBCH may alternatively be understood as receiving the radio signal carrying the PBCH, or demodulating the PBCH or detecting the PBCH.

S603: The first-type terminal obtains the *M*₁ symbols of the PBCH.

The *M*₁ symbols are mapped to the first time-frequency resource. In other words, the first-type terminal obtains the *M*₁ symbols mapped to the first time-frequency resource. The first time-frequency resource belongs to the PBCH time-frequency resource, the PBCH time-frequency resource consists of the first time-frequency resource and the second time-frequency resource, and the frequency domain positions of the first time-frequency resource and the second time-frequency resource do not overlap. The *M*₁ symbols are the *M*₁ symbols in the *M* symbols of the PBCH, and the remaining *M* - *M*₁ symbols are mapped to the second time-frequency resource. For details, refer to related descriptions in step S601. Details are not described herein again.

Optionally, that the first-type terminal obtains the *M*₁ symbols mapped to the first time-frequency resource may be understood as that the first-type terminal obtains the *M*₁ symbols from the radio signal on the first time-frequency resource. For example, the first-type terminal may sequentially perform down-conversion, an analog-to-digital converter (analog-to-digital converter, ADC), serial-to-parallel (sequence-to-parallel, S->P) conversion, fast Fourier transform (fast Fourier transform, FFT) for a time domain signal carried on each OFDM symbol, and the like on the radio signal, to obtain the *M*₁ symbols mapped to the first time-frequency resource.

Optionally, after obtaining the *M*₁ symbols, the first-type terminal may sequentially perform demodulation, descrambling, de-rate matching, decoding, and CRC check based on the *M*₁ symbols to obtain the information bits of the PBCH, so that access is performed based on the information bits of the PBCH.

S604: The second-type terminal obtains the *M* symbols of the PBCH.

The *M* symbols are mapped to the PBCH time-frequency resource, the PBCH time-frequency resource consists of the first time-frequency resource and the second time-frequency resource, and the frequency domain positions of the first time-frequency resource and the second time-frequency resource do not overlap. The *M*₁ consecutive symbols in the *M* symbols are mapped to the first time-frequency resource, and the remaining *M* - *M*₁ symbols are mapped to the second time-frequency resource. For details, refer to related descriptions in step S601. Details are not described herein again.

Optionally, the second-type terminal may first obtain all the symbols on the PBCH time-frequency resource, and then restore, according to a mapping rule (to be specific, mapping the *M*₁ consecutive symbols to the first time-frequency resource, and mapping the remaining *M* - *M*₁ symbols to the second time-frequency resource), based on the *M*₁ symbols received on the first time-frequency resource and the *M* - *M*₁ symbols received on the second time-frequency resource, complete *M* symbols that are in an order the same as a sending order.

An example in which the *M*₁ symbols mapped to the first time-frequency resource are the first *M*₁ symbols is used. The second-type terminal may serially connect (or concatenate) the *M*₁ symbols received on the first time-frequency resource and the *M* - *M*₁ symbols received on the second time-frequency resource, to obtain the complete *M* symbols.

Optionally, an implementation in which the second-type terminal obtains the *M* symbols of the PBCH is similar to an implementation in which the first-type terminal obtains the *M*₁ symbols of the PBCH. For details, refer to related descriptions in step S603. Details are not described herein again.

Optionally, after obtaining the *M* symbols of the PBCH, the second-type terminal may sequentially perform demodulation, descrambling, de-rate matching, decoding, and CRC check based on the *M* symbols, to obtain the information bits of the PBCH, so that access is performed based on the information bits of the PBCH.

The foregoing uses an example in which the PBCH time-frequency resource consists of the first time-frequency resource and the second time-frequency resource for description. In addition, the PBCH time-frequency resource may include the first time-frequency resource and the second time-frequency resource. In other words, in addition to the first time-frequency resource and the second time-frequency resource, the PBCH time-frequency resource may further include another time-frequency resource, and a union set of the first time-frequency resource and the second time-frequency resource may be a part of the PBCH time-frequency resource. In this scenario, a symbol mapped to the another time-frequency resource may be set to 0.

The foregoing describes the communication method provided in this application. In addition, this application further provides a communication apparatus, configured to implement functions in the foregoing method embodiments.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

FIG. 12 is a diagram of a structure of a communication apparatus 120. The communication apparatus 120 includes a processing module 1201 and a transceiver module 1202. The communication apparatus 120 may be configured to implement a function of the RAN node, the first-type terminal, or the second-type terminal.

In some embodiments, the communication apparatus 120 may further include a storage module (not shown in FIG. 12), configured to store program instructions and data.

In some embodiments, the transceiver module 1202 may also be referred to as a transceiver unit, and is configured to implement a sending function and/or a receiving function. The transceiver module 1202 may include a transceiver circuit, a transceiver machine, a transceiver, or a communication interface.

In some embodiments, the transceiver module 1202 may include a receiving module and a sending module, respectively configured to perform receiving steps and sending steps performed by the RAN node, the first-type terminal, or the second-type terminal in the foregoing method embodiments, and/or configured to support other processes of the technologies described in this specification. The processing module 1201 may be configured to perform processing steps performed by the RAN node, the first-type terminal, or the second-type terminal in the foregoing method embodiments, and/or configured to support other processes of the technologies described in this specification.

When the communication apparatus 120 is configured to implement a function of the RAN node:
The processing module 1201 is configured to map *M* symbols of a physical broadcast channel PBCH to a PBCH time-frequency resource. The PBCH time-frequency resource consists of a first time-frequency resource and a second time-frequency resource, and subcarriers occupied by the first time-frequency resource and the second time-frequency resource do not overlap. *M*₁ consecutive symbols in the *M* symbols are mapped to the first time-frequency resource, remaining *M* - *M*₁ symbols are mapped to the second time-frequency resource, and *M* and *M*₁ are positive integers greater than 1.

Optionally, the transceiver module 1202 is configured to send the PBCH.

When the communication apparatus 120 is configured to implement a function of the first-type terminal, in a possible implementation:

The processing module 1201 is configured to obtain *M*₁ symbols of a physical broadcast channel PBCH, where the *M*₁ symbols are mapped to a first time-frequency resource. The first time-frequency resource belongs to a PBCH time-frequency resource, the PBCH time-frequency resource consists of the first time-frequency resource and a second time-frequency resource, and subcarriers occupied by the first time-frequency resource and the second time-frequency resource do not overlap. The *M*₁ symbols are *M*₁ consecutive symbols in *M* symbols of the PBCH, remaining *M* - *M*₁ symbols in the *M*₁ symbols are mapped to the second time-frequency resource, and *M* and *M*₁ are positive integers greater than 1.

Optionally, the transceiver module 1202 is configured to receive the PBCH.

When the communication apparatus 120 is configured to implement a function of the second-type terminal, in a possible implementation:
The processing module 1201 is configured to obtain *M* symbols of a physical broadcast channel PBCH, where the *M* symbols are mapped to a PBCH time-frequency resource, the PBCH time-frequency resource consists of a first time-frequency resource and a second time-frequency resource, and subcarriers occupied by the first time-frequency resource and the second time-frequency resource do not overlap. *M*₁ consecutive symbols in the *M* symbols are mapped to the first time-frequency resource, remaining *M* - *M*₁ symbols are mapped to the second time-frequency resource, and *M* and *M*₁ are positive integers greater than 1.

Optionally, the transceiver module 1202 is configured to receive the PBCH.

When the communication apparatus 120 is configured to implement a function of the RAN node, the first-type terminal, or the second-type terminal:
Optionally, a bandwidth of the first time-frequency resource is less than or equal to a maximum receive bandwidth of the first-type terminal. A bandwidth of the PBCH time-frequency resource is greater than the maximum receive bandwidth of the first-type terminal, and is less than or equal to a maximum receive bandwidth of the second-type terminal.

Optionally, the first time-frequency resource is a common PBCH time-frequency resource of the first-type terminal and the second-type terminal, and the second time-frequency resource is a PBCH time-frequency resource dedicated to the second-type terminal relative to the first-type terminal.

Optionally, subcarriers occupied by the first time-frequency resource are contiguous in frequency domain.

Optionally, the *M*₁ consecutive symbols in the *M* symbols are first *M*₁ symbols in the *M* symbols.

Optionally, the *M*₁ consecutive symbols in the *M* symbols are last *M*₁ symbols in the *M* symbols.

Optionally, *M*₁ is a quantity of valid resource elements REs in the first time-frequency resource, and the valid RE is an RE in the first time-frequency resource other than an RE used for mapping a demodulation reference signal DMRS.

Optionally, a mapping order of the *M*₁ consecutive symbols on the first time-frequency resource is the same as a mapping order of the remaining *M* - *M*₁ symbols on the second time-frequency resource.

Optionally, the mapping order of the *M*₁ consecutive symbols on the first time-frequency resource is: first in ascending order of subcarrier indexes and then in ascending order of orthogonal frequency division multiplexing OFDM symbol indexes.

Optionally, a union set of OFDM symbols occupied by the first time-frequency resource and the second time-frequency resource is OFDM symbols occupied by the PBCH time-frequency resource.

All related content of the steps in the foregoing method embodiments may be cited in function descriptions of the corresponding functional modules. Details are not described herein again.

In this application, the communication apparatus 120 may be presented in a form of the functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another device that can provide the foregoing functions.

In some embodiments, when the communication apparatus 120 in FIG. 12 is a chip or a chip system, a function or an implementation process of the transceiver module 1202 may be implemented through an input/output interface (or a communication interface) of the chip or the chip system, and a function or an implementation process of the processing module 1201 may be implemented by using a processor (or a processing circuit) of the chip or the chip system.

Because the communication apparatus 120 provided in this embodiment may perform the foregoing method, for technical effects that can be achieved by the communication apparatus 120, refer to the foregoing method embodiments. Details are not described herein again.

In a possible product form, the first-type terminal, the second-type terminal, or the RAN node in embodiments of this application may be implemented by using the following: one or more field-programmable gate arrays (field-programmable gate arrays, FPGAs), a programmable logic device (programmable logic device, PLD), a controller, a state machine, gate logic, a discrete hardware component, any other appropriate circuit, or any combination of circuits that can perform various functions described throughout this application.

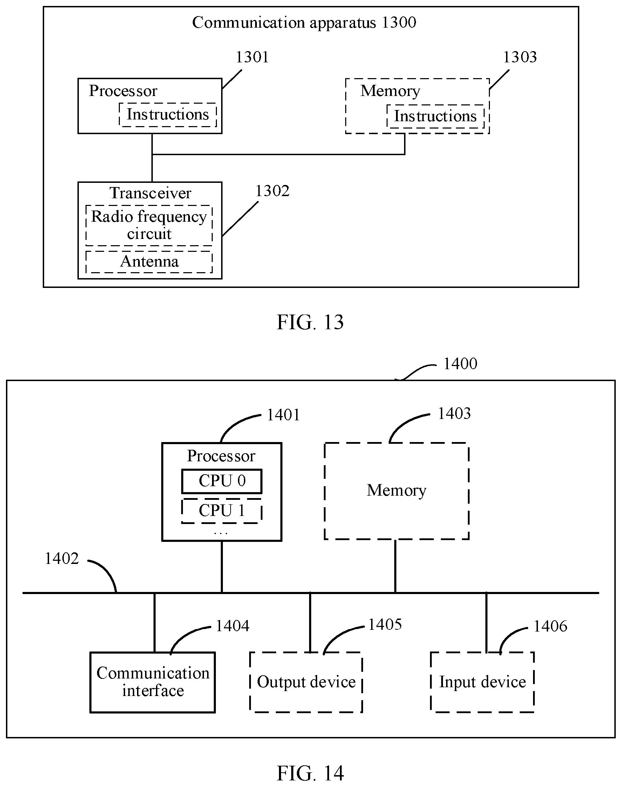

In another possible product form, the first-type terminal, the second-type terminal, or the RAN node in embodiments of this application may be implemented by using a general bus architecture. For ease of description, FIG. 13 is a diagram of a structure of a communication apparatus 1300 according to an embodiment of this application. The communication apparatus 1300 includes a processor 1301 and a transceiver 1302. The communication apparatus 1300 may be a first-type terminal, or a chip or a chip system in the first-type terminal; the communication apparatus 1300 may be a second-type terminal, or a chip or a chip system in the second-type terminal; or the communication apparatus 1300 may be a RAN node, or a chip or a module in the RAN node. FIG. 13 shows only main components of the communication apparatus 1300. In addition to the processor 1301 and the transceiver 1302, the communication apparatus may further include a memory 1303 and an input/output apparatus (not shown in the figure).

Optionally, the processor 1301 is mainly configured to: process a communication protocol and communication data, control the entire communication apparatus, execute a software program, and process data of the software program, to implement the method provided in the foregoing method embodiments. The memory 1303 is mainly configured to store a software program and data. The transceiver 1302 may include a radio frequency circuit and an antenna. The radio frequency circuit is mainly configured to perform conversion between a baseband signal and a radio frequency signal, and process a radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user.

Optionally, the processor 1301, the transceiver 1302, and the memory 1303 may be connected through a communication bus.

After the communication apparatus is powered on, the processor 1301 may read the software program in the memory 1303, interpret and execute instructions of the software program, and process the data of the software program. When data needs to be sent wirelessly, the processor 1301 performs baseband processing on the to-be-sent data, and then outputs a baseband signal to the radio frequency circuit. The radio frequency circuit performs radio frequency processing on the baseband signal, and then sends a radio frequency signal in an electromagnetic wave form through the antenna. When data is sent to the communication apparatus, the radio frequency circuit receives a radio frequency signal through the antenna, converts the radio frequency signal into a baseband signal, and outputs the baseband signal to the processor 1301. The processor 1301 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in terms of hardware implementation, a person skilled in the art may figure out that the communication apparatus 120 may be in a form of the communication apparatus 1300 shown in FIG. 13.

In an example, a function or an implementation process of the processing module 1201 in FIG. 12 may be implemented by the processor 1301 in the communication apparatus 1300 shown in FIG. 13 by invoking computer-executable instructions stored in the memory 1303, and a function or an implementation process of the transceiver module 1202 in FIG. 12 may be implemented by the transceiver 1302 in the communication apparatus 1300 shown in FIG. 13.

In still another possible product form, the first-type terminal, the second-type terminal, or the RAN node in this application may use a composition structure shown in FIG. 14, or include components shown in FIG. 14. FIG. 14 is a composition diagram of a communication apparatus 1400 according to this application. The communication apparatus 1400 may be a first-type terminal, or a chip or a system on chip in the first-type terminal; may be a second-type terminal, or a chip or a system on chip in the second-type terminal; or may be a RAN node, or a module, a chip, or a system on chip in the RAN node.

As shown in FIG. 14, the communication apparatus 1400 includes at least one processor 1401 and at least one communication interface (in FIG. 14, only an example in which one communication interface 1404 and one processor 1401 are included is used for description). Optionally, the communication apparatus 1400 may further include a communication bus 1402 and a memory 1403.

The processor 1401 may be a general-purpose central processing unit (central processing unit, CPU), a general-purpose processor, a network processor (network processor, NP), a digital signal processor (digital signal processor, DSP), a microprocessor, a microcontroller, a PLD, or any combination thereof. Alternatively, the processor 1401 may be another apparatus having a processing function, for example, a circuit, a device, or a software module. This is not limited.

The communication bus 1402 is configured to connect different components of the communication apparatus 1400, to enable communication between different components. The communication bus 1402 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used in FIG. 14 for representation, but this does not mean that there is only one bus or only one type of bus.

The communication interface 1404 is configured to communicate with another device or a communication network. For example, the communication interface 1404 may be a module, a circuit, a transceiver, or any apparatus that can implement communication. Optionally, the communication interface 1404 may alternatively be an input/output interface located in the processor 1401, to implement signal input and signal output of the processor.

The memory 1403 may be an apparatus having a storage function, and is configured to store instructions and/or data. The instructions may be computer programs.

For example, the memory 1403 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), or a magnetic disk storage medium or another magnetic storage device. This is not limited.

It should be noted that the memory 1403 may be independent of the processor 1401, or may be integrated with the processor 1401. The memory 1403 may be located inside the communication apparatus 1400, or may be located outside the communication apparatus 1400. This is not limited. The processor 1401 is configured to execute the instructions stored in the memory 1403, to implement the method provided in the following embodiments of this application.

In an optional implementation, the communication apparatus 1400 may further include an output device 1405 and an input device 1406. The output device 1405 communicates with the processor 1401, and may display information in a plurality of manners. For example, the output device 1405 may be a liquid crystal display (liquid crystal display, LCD), a light emitting diode (light emitting diode, LED) display device, a cathode ray tube (cathode ray tube, CRT) display device, a projector (projector), or the like. The input device 1406 communicates with the processor 1401, and may receive an input of a user in a plurality of manners. For example, the input device 1406 may be a mouse, a keyboard, a touchscreen device, or a sensing device.

In some embodiments, in hardware implementation, a person skilled in the art may figure out that the communication apparatus 120 shown in FIG. 12 may be in a form of the communication apparatus 1400 shown in FIG. 14.

In an example, a function or an implementation process of the processing module 1201 in FIG. 12 may be implemented by the processor 1401 in the communication apparatus 1400 shown in FIG. 14 by invoking computer-executable instructions stored in the memory 1403, and a function or an implementation process of the transceiver module 1202 in FIG. 12 may be implemented by the communication interface 1404 in the communication apparatus 1400 shown in FIG. 14.

It should be noted that the structure shown in FIG. 14 does not constitute a specific limitation on the terminal or the RAN node. For example, in some other embodiments of this application, the terminal or the RA node may include more or fewer components than those shown in the figure, some components may be combined, some components may be split, or different component arrangements may be used. The components shown in the figure may be implemented by hardware, software, or a combination of software and hardware.

In some embodiments, an embodiment of this application further provides a communication apparatus. The communication apparatus includes a processor, configured to implement the method according to any one of the foregoing method embodiments.

In a possible implementation, the communication apparatus further includes a memory. The memory is configured to store a necessary computer program and necessary data. The computer program may include instructions. The processor may invoke the instructions in the computer program stored in the memory, to instruct the communication apparatus to perform the method in any foregoing method embodiments. Certainly, the communication apparatus may not include a memory.

In another possible implementation, the communication apparatus further includes an interface circuit. The interface circuit is a code/data read/write interface circuit, and the interface circuit is configured to: receive computer-executable instructions (the computer-executable instructions are stored in a memory, and may be directly read from the memory, or may be read via another device), and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is the chip system, the communication apparatus may include a chip, or may include a chip and another discrete device. This is not specifically limited in embodiments of this application.

This application further provides a computer-readable storage medium. The computer-readable storage medium stores a computer program or instructions. When the computer program or instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiments. Details are not described herein again.

It may be understood that the system, apparatuses, and method described in this application may alternatively be implemented in another manner. For example, the described apparatus embodiments are merely examples. For example, unit division is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented by using some interfaces. The indirect couplings or communication connections between the apparatuses or units may be implemented in electronic, mechanical, or other forms.

The units described as separate parts may be physically separated or not, this is, may be located together in the same place or distributed on a plurality of network units. Parts displayed as units may be or may be not physical units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

All or some of the foregoing embodiments may be implemented by using software, hardware, firmware, or any combination thereof. When a software program is used for implementation, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatus.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the scope of this application. Correspondingly, the specification and accompanying drawings are merely example descriptions of this application defined by the accompanying claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of the following claims and their equivalent technologies.

## Claims

1. A communication method, wherein the method comprises:
mapping *M* symbols of a physical broadcast channel PBCH to a PBCH time-frequency resource, wherein the PBCH time-frequency resource consists of a first time-frequency resource and a second time-frequency resource, and subcarriers occupied by the first time-frequency resource and the second time-frequency resource do not overlap, wherein
*M*₁ consecutive symbols in the *M* symbols are mapped to the first time-frequency resource, remaining *M* - *M*₁ symbols are mapped to the second time-frequency resource, and *M* and *M*₁ are positive integers greater than 1.

2. A communication method, wherein the method comprises:
obtaining *M*₁ symbols of a physical broadcast channel PBCH, wherein the *M*₁ symbols are mapped to a first time-frequency resource, the first time-frequency resource belongs to a PBCH time-frequency resource, the PBCH time-frequency resource consists of the first time-frequency resource and a second time-frequency resource, and subcarriers occupied by the first time-frequency resource and the second time-frequency resource do not overlap, wherein
the *M*₁ symbols are *M*₁ consecutive symbols in *M* symbols of the PBCH, remaining *M* - *M*₁ symbols in the *M* symbols are mapped to the second time-frequency resource, and *M* and *M*₁ are positive integers greater than 1.

3. A communication method, wherein the method comprises:
obtaining *M* symbols of a physical broadcast channel PBCH, wherein the *M* symbols are mapped to a PBCH time-frequency resource, the PBCH time-frequency resource consists of a first time-frequency resource and a second time-frequency resource, and subcarriers occupied by the first time-frequency resource and the second time-frequency resource do not overlap, wherein
*M*₁ consecutive symbols in the *M* symbols are mapped to the first time-frequency resource, remaining *M* - *M*₁ symbols are mapped to the second time-frequency resource, and *M* and *M*₁ are positive integers greater than 1.

4. The method according to any one of claims 1 to 3, wherein a bandwidth of the first time-frequency resource is less than or equal to a maximum receive bandwidth of a first-type terminal; and a bandwidth of the PBCH time-frequency resource is greater than the maximum receive bandwidth of the first-type terminal, and is less than or equal to a maximum receive bandwidth of a second-type terminal.

5. The method according to any one of claims 1 to 4, wherein the first time-frequency resource is a common PBCH time-frequency resource of the first-type terminal and the second-type terminal, and the second time-frequency resource is a PBCH time-frequency resource dedicated to the second-type terminal relative to the first-type terminal.

6. The method according to any one of claims 1 to 5, wherein subcarriers occupied by the first time-frequency resource are contiguous in frequency domain.

7. The method according to any one of claims 1 to 6, wherein the *M*₁ consecutive symbols in the *M* symbols are first *M*₁ symbols in the *M* symbols.

8. The method according to any one of claims 1 to 6, wherein the *M*₁ consecutive symbols in the *M* symbols are last *M*₁ symbols in the *M* symbols.

9. The method according to any one of claims 1 to 8, wherein *M*₁ is a quantity of valid resource elements REs in the first time-frequency resource, and the valid RE is an RE in the first time-frequency resource other than an RE used for mapping a demodulation reference signal DMRS.

10. The method according to any one of claims 1 to 9, wherein a mapping order of the *M*₁ consecutive symbols on the first time-frequency resource is the same as a mapping order of the remaining *M* - *M*₁ symbols on the second time-frequency resource.

11. The method according to claim 10, wherein the mapping order of the *M*₁ consecutive symbols on the first time-frequency resource is: first in ascending order of subcarrier indexes and then in ascending order of orthogonal frequency division multiplexing OFDM symbol indexes.

12. The method according to any one of claims 1 to 11, wherein a union set of orthogonal frequency division multiplexing OFDM symbols occupied by the first time-frequency resource and the second time-frequency resource is OFDM symbols occupied by the PBCH time-frequency resource.

13. A communication apparatus, wherein the communication apparatus comprises a processing module, wherein
the processing module is configured to map *M* symbols of a physical broadcast channel PBCH to a PBCH time-frequency resource, wherein the PBCH time-frequency resource consists of a first time-frequency resource and a second time-frequency resource, and subcarriers occupied by the first time-frequency resource and the second time-frequency resource do not overlap, wherein
*M*₁ consecutive symbols in the *M* symbols are mapped to the first time-frequency resource, remaining *M* - *M*₁ symbols are mapped to the second time-frequency resource, and *M* and *M*₁ are positive integers greater than 1.

14. A communication apparatus, wherein the communication apparatus comprises a processing module, wherein
the processing module is configured to obtain *M*₁ symbols of a physical broadcast channel PBCH, wherein the *M*₁ symbols are mapped to a first time-frequency resource, the first time-frequency resource belongs to a PBCH time-frequency resource, the PBCH time-frequency resource consists of the first time-frequency resource and a second time-frequency resource, and subcarriers occupied by the first time-frequency resource and the second time-frequency resource do not overlap, wherein
the *M*₁ symbols are *M*₁ consecutive symbols in *M* symbols of the PBCH, remaining *M* - *M*₁ symbols in the *M*₁ symbols are mapped to the second time-frequency resource, and *M* and *M*₁ are positive integers greater than 1.

15. A communication apparatus, wherein the communication apparatus comprises a processing module, wherein
the processing module is configured to obtain *M* symbols of a physical broadcast channel PBCH, wherein the *M* symbols are mapped to a PBCH time-frequency resource, the PBCH time-frequency resource consists of a first time-frequency resource and a second time-frequency resource, and subcarriers occupied by the first time-frequency resource and the second time-frequency resource do not overlap, wherein
*M*₁ consecutive symbols in the *M* symbols are mapped to the first time-frequency resource, remaining *M* - *M*₁ symbols are mapped to the second time-frequency resource, and *M* and *M*₁ are positive integers greater than 1.

16. The communication apparatus according to any one of claims 13 to 15, wherein a bandwidth of the first time-frequency resource is less than or equal to a maximum receive bandwidth of a first-type terminal; and a bandwidth of the PBCH time-frequency resource is greater than the maximum receive bandwidth of the first-type terminal, and is less than or equal to a maximum receive bandwidth of a second-type terminal.

17. The communication apparatus according to any one of claims 13 to 16, wherein the first time-frequency resource is a common PBCH time-frequency resource of the first-type terminal and the second-type terminal, and the second time-frequency resource is a PBCH time-frequency resource dedicated to the second-type terminal relative to the first-type terminal.

18. The communication apparatus according to any one of claims 13 to 17, wherein subcarriers occupied by the first time-frequency resource are contiguous in frequency domain.

19. The communication apparatus according to any one of claims 13 to 18, wherein the *M*₁ consecutive symbols in the *M* symbols are first *M*₁ symbols in the *M* symbols.

20. The communication apparatus according to any one of claims 13 to 18, wherein the *M*₁ consecutive symbols in the *M* symbols are last *M*₁ symbols in the *M* symbols.

21. The communication apparatus according to any one of claims 13 to 20, wherein *M*₁ is a quantity of valid resource elements REs in the first time-frequency resource, and the valid RE is an RE in the first time-frequency resource other than an RE used for mapping a demodulation reference signal DMRS.

22. The communication apparatus according to any one of claims 13 to 21, wherein a mapping order of the *M*₁ consecutive symbols on the first time-frequency resource is the same as a mapping order of the remaining *M* - *M*₁ symbols on the second time-frequency resource.

23. The communication apparatus according to claim 22, wherein the mapping order of the *M*₁ consecutive symbols on the first time-frequency resource is: first in ascending order of subcarrier indexes and then in ascending order of orthogonal frequency division multiplexing OFDM symbol indexes.

24. The communication apparatus according to any one of claims 13 to 23, wherein a union set of orthogonal frequency division multiplexing OFDM symbols occupied by the first time-frequency resource and the second time-frequency resource is OFDM symbols occupied by the PBCH time-frequency resource.

25. A communication apparatus, wherein the communication apparatus comprises a processor, and the processor is configured to run a computer program or instructions, to enable the communication apparatus to perform the method according to any one of claims 1 to 12.

26. A chip or a chip system, wherein the chip or the chip system comprises a processor, the processor is coupled to a memory, the memory is configured to store a program or instructions, and when the program or the instructions are executed by the processor, the method according to any one of claims 1 to 12 is performed.

27. A computer-readable storage medium, wherein the computer-readable storage medium stores computer instructions or a program, and when the computer instructions or the program is run on a computer, the method according to any one of claims 1 to 12 is performed.

28. A computer program product, wherein the computer program product comprises computer instructions; and when a part or all of the computer instructions are run on a computer, the method according to any one of claims 1 to 12 is performed.
